(19) Europäisches Patentamt / European Patent Office / Office européen des brevets

(11) **EP 3 366 710 B1**

(12) **EUROPEAN PATENT SPECIFICATION**

(45) Date of publication and mention
of the grant of the patent:
**30.09.2020 Bulletin 2020/40**

(21) Application number: **16857384.8**

(22) Date of filing: **14.10.2016**

(51) Int Cl.:
**C08F 214/26** $^{(2006.01)}$ **C08F 2/24** $^{(2006.01)}$

(86) International application number:
**PCT/JP2016/080608**

(87) International publication number:
**WO 2017/069069 (27.04.2017 Gazette 2017/17)**

(54) **FLUORORESIN AND METHOD FOR PRODUCING SAME**

FLUORHARZ UND VERFAHREN ZUR HERSTELLUNG DAVON

RÉSINE FLUORÉE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2015 JP 2015206267**

(43) Date of publication of application:
**29.08.2018 Bulletin 2018/35**

(73) Proprietor: **AGC Inc.**
**Tokyo 100-8405 (JP)**

(72) Inventors:
• **YAGI, Keisuke**
**Tokyo 100-8405 (JP)**
• **KOBAYASHI, Shigeki**
**Tokyo 100-8405 (JP)**
• **NAGAI, Hiroki**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
**JP-A- H0 733 807      JP-A- S4 925 083**
**JP-A- S4 925 083      JP-A- S4 962 584**
**JP-A- H08 506 140**

• **DATABASE CA [Online] CHEMICAL ABSTRACTS SERVICE, COLUMBUS, OHIO, US; MI, WANJUN: "High-performance, insulating and anticorrosive ETFE and its preparation", XP002788305, retrieved from STN Database accession no. 2009:1556506 & CN 101 597 354 A (JIANGSU HUAAO HIGH TECH DEV CO [CN]) 9 December 2009 (2009-12-09)**

**EP 3 366 710 B1**

## Description

Fluororesins are excellent in heat resistance, chemical resistance and weather resistance and are widely used in various applications.

While high-molecular-weight tetrafluoroethylene monopolymers (hereinafter referred to also as "PTFE") are not melt-flowable and hence cannot be molded by extrusion, copolymers of tetrafluoroethylene and ethylene are known as fluororesins which can be molded by hot melt extrusion (Patent Documents 1 and 2).

Patent Documents 1 and 2 relate to production of extrusion-moldable tetrafluoroethylene/ethylene copolymers. In Examples in Patent Document 2, tetrafluoroethylene/ethylene copolymers were produced by using n-cetane, which has a chain transfer property, as a dispersion stabilizer, and large amounts of radical polymerization initiators in the polymerization. Therefore, the resulting copolymers are not high polymers and are melt-flowable.

Patent Document 1: JP-B-S39-22586
Patent Document 2: JP-B-S55-23847

CN 101 597 354 A describes insulating corrosion-resistant fluorine materials and the manufacturing method thereof.

JP S49 25083 A discloses a tetrafluoroethylene/ethylene copolymer.

JP S49-62584 A describes a tetrafluoroethylene/ethylene copolymer.

JP H07 33807 A discloses the production of an ethylene-tetrafluoroethylene copolymer.

JPH08 506140 A describes perfluoroalkyl sulfide polymer solvents for fluoromonomer polymerization.

Conventional PTFE and tetrafluoroethylene/ethylene copolymers deteriorate in mechanical properties under radioactive irradiation due to cleavage of molecular chains. Therefore, they have the problem that they cannot be used in radioactive environments such as nuclear facilities and outer space.

The present invention has been made in view of the above-mentioned circumstances, and it is an object of the present invention to provide a fluororesin excellent in radiation resistance.

The present inventors found that a fluororesin with excellent radiation resistance can be obtained by copolymerizing tetrafluoroethylene and ethylene in a specific ratio so as to give a highly crystalline high polymer.

The present invention provides a fluororesin composed of a tetrafluoroethylene/ethylene copolymer as set out in claims 1-3.

The present invention provides a method of producing a fluororesin composed of tetrafluoroethylene/ethylene copolymer as set out in claims 4-9.

The fluororesin of the present invention is excellent in radiation resistance.

The method for producing the fluororesin can give a fluororesin excellent in radiation resistance.

[Fig. 1] A graph showing the results of evaluation of radiation resistance of the fluororesins obtained in the Examples.
[Fig. 2] A graph showing the results of evaluation of radiation resistance of the fluororesins obtained in the Comparative Examples.
[Fig. 3] A scanning electron micrograph of the inner structure of beads obtained by paste extrusion and stretching of a fluororesin obtained in an Example.

The meanings of the following terms are as follows.

The "melt flow rate (hereinafter sometimes referred to as MFR)" is a numerical value measured at 297°C under a load of 49 N in accordance with ASTM D3159 B. Melt flow rate tends to increase with molecular weight. It is known that industrially melt-moldable fluororesins usually have MFRs of 0.1 g/ 10 min or greater. Fluororesins having MFRs lower than 0.1 g/ 10 min are treated as non-melt flowable, because in practice, they are not melt-moldable, though measurement of MFRs lower than 0.1 g/ 10 min is possible.

The "melting point" is the temperature at which an endothermic peak due to melting is detected by differential scanning calorimetry (DSC).

The "degree of alternation" is the ratio (unit: %) of alternating arrangements of TFE units and E units in a fluororesin. The measuring method will be described later. If a fluororesin is composed of equimolar amounts of TFE units and E units arranged completely alternately, the degree of alternation is 100%.

The unit of content "ppm" is on a mass basis.

Polymerization pressure is expressed as gauge pressure.

Hereinafter, units derived from tetrafluoroethylene (hereinafter referred to as "TFE") are referred to as TFE units, and units derived from ethylene are referred to as E units. The ratio of respective units is referred to as the copolymer composition.

The fluororesin of the present invention is composed of a bipolymer of tetrafluoroethylene and ethylene. The bipolymer does not contain units derived from any other monomers than TFE and ethylene and may contain a negligibly trace mass of other components than TFE units and E units.

In the method for producing a fluororesin of the present invention, the yield of the bipolymer is close to 100%, and the molar ratio of TFE units and E units in the fluororesin is estimated to be equal to the molar ratio of TFE and ethylene consumed in the copolymerization of TFE and ethylene.

Hereinafter, the bipolymer of the present invention consisting of TFE units and E units is referred to as "TFE/E copolymer".

<Fluororesin>

The fluororesin of the present invention is composed of a TFE/E copolymer consisting of TFE units and E units in a specific ratio. The TFE/E copolymer does not contain units derived from any other monomers than TFE and ethylene.

The ratio of TFE units to the total of TFE units and E units is from 50 to 60 mol%, and E units account for the rest. The ratio of TFE units is preferably from 50 to 55 mol%, and more preferably from 50 to 52 mol%.

When the ratio of TFE units is 50 mol% or higher, the fluororesin has good heat resistance because the fluororesin contains fewer sequences of E units. When the ratio is 60 mol% or lower, the fluororesin has a high crystallinity.

The MFR of the fluororesin of the present invention is at most 0.08 g/ 10 min, preferably 0.05 g/ 10 min. When the MFR of the fluororesin is within the above-mentioned range, the fluororesin has excellent radiation resistance. The above-mentioned MFR can be attained by making the molecular weight of the TFE/E copolymer sufficiently high.

The melting point of the fluororesin is 275 to 290°C, preferably 275 to 285°C. When the melting point is not lower than the lower limit of the above-mentioned range, the fluororesin has excellent radiation resistance. When the melting point is not higher than the upper limit of the above-mentioned range, the fluororesin is produced with good operational efficiency.

The crystallinity of the fluororesin is preferably from 75 to 95%, more preferably from 80 to 90%. When the crystallinity is not lower than the lower limit of the above-mentioned range, the fluororesin has excellent radiation resistance. When the melting point is not higher than the upper limit of the above-mentioned range, the fluororesin is produced with good operational efficiency.

The degree of alternation of the TFE/E copolymer is preferably from 75 to 95%, more preferably from 85 to 95%. When the degree of alternation is not lower than the lower limit of the above-mentioned range, the fluororesin is excellent in radiation resistance. When the degree of alternation is not higher than the upper limit of the above-mentioned range, the fluororesin is produced with good operational efficiency.

<Method for Producing Fluororesin>

The TFE/E copolymer of the present invention can be obtained by copolymerizing tetrafluoroethylene and ethylene in a specific ratio in the presence of an aqueous medium, an emulsifier, a specific paraffin wax and a specific amount of a radical polymerization initiator. Copolymerization in the presence of an emulsifier by emulsion polymerization allows production of a TFE/E copolymer having a high molecular weight and favors a fluororesin having a small MFR.

[Aqueous Medium]

As the aqueous medium, water or a liquid mixture of a water-miscible organic solvent and water is used. As the water, ion exchanged water, pure water, or ultrapure water may be mentioned. As the water-miscible organic solvent, an alcohol, a ketone, an ether, ethylene glycol, or propylene glycol may be mentioned. Among them, an alcohol is preferred in view of gas absorption. As the alcohol, tert-butanol, n-butanol, ethanol, or methanol may be mentioned. tert-Butanol is preferred because it makes a chain transfer reaction less likely in favor of production of a TFE/E copolymer having a high molecular weight.

The amount of a water-miscible organic solvent, if any, is preferably from 1 to 50 parts by mass, more preferably from 3 to 20 parts by mass, relative to 100 parts by mass of water. The amount of an aqueous medium is the total amount of a water-miscible organic solvent and water, exclusive of other additives such as a polymerization initiator, and the amount of a radical polymerization initiator is based on the amount of an aqueous medium.

[Emulsifier]

As the emulsifier, a known fluorinated emulsifier may be used. Preferred is at least one fluorinated emulsifier selected from the group consisting of $C_{4-7}$ fluorinated carboxylic acids which may have an etheric oxygen atom and salts thereof because they are not persistent or biologically accumulative. More preferred is at least one fluorinated emulsifier selected from the group consisting of $C_{4-7}$ fluorinated carboxylic acids having an etheric oxygen atom and salts thereof.

The number of carbon atoms means the total number of carbon atoms in a fluorinated emulsifier.

The fluorinated carboxylic acids having an etheric oxygen atom is a $C_{4-7}$ compound having an etheric oxygen atom in the main carbon chain having a -COOH terminal group. The terminal -COOH group may be in the form of a salt. The main chain may contain at least one etheric oxygen atom, preferably from 1 to 4 etheric oxygen atoms, more preferably one or two etheric oxygen atoms.

The fluorinated carboxylic acid is preferably a perfluoromonooxaalkanoic acid, a perfluorooxaalkanoic acid having from 2 to 4 etheric oxygen atoms instead of carbon atoms or a carboxylic acid derived from such a carboxylic acid by replacing from 1 to 3 fluorine atoms by hydrogen atoms. The number of carbon atoms in these carboxylic acids does not include carbon atoms replaced by oxygen atoms.

Preferred examples of the fluorinated carboxylic acid are $C_2F_5OCF_2CF_2OCF_2COOH$, $C_3F_7OCF_2CF_2OCF_2COOH$, $CF_3OCF_2OCF_2OCF_2OCF_2COOH$, $CF_3O(CF_2CF_2O)_2CF_2COOH$, $CF_3CF_2O(CF_2)_4COOH$, $CF_3CFHO(CF_2)_4COOH$, $CF_3OCF(CF_3)CF_2OCF(CF_3)COOH$, $CF_3O(CF_2)_3OCF(CF_3)COOH$, $CF_3O(CF_2)_3OCHFCF_2COOH$, $C_4F_9OCF(CF_3)COOH$, $C_4F_9OCF_2CF_2COOH$, $CF_3O(CF_2)_3OCF_2COOH$, $CF_3O(CF_2)_3OCHFCOOH$, $CF_3OCF_2OCF_2OCF_2COOH$, $C_4F_9OCF_2COOH$, $C_3F_7OCF_2CF_2COOH$, $C_3F_7OCHFCF_2COOH$, $C_3F_7OCF(CF_3)COOH$, $CF_3CFHO(CF_2)_3COOH$, $CF_3OCF_2CF_2OCF_2COOH$, $C_2F_5OCF_2CF_2COOH$, $C_3F_7OCHFCOOH$, $CF_3OCF_2CF_2COOH$ and $CF_3(CF_2)_4COOH$.

More preferred are $C_2F_5OCF_2CF_2OCF_2COOH$, $CF_3O(CF_2)_3OCF_2COOH$, $CF_3OCF(CF_3)CF_2OCF(CF_3)COOH$, $CF_3O(CF_2)_3OCF_2CF_2COOH$, $CF_3O(CF_2)_3OCHFCF_2COOH$, $C_4F_9OCF(CF_3)COOH$ and $C_3F_7OCF(CF_3)COOH$.

As fluorinated carboxylic acid salts, alkali metal salts or ammonium salts of the above-mentioned fluorinated carboxylic acids may be mentioned, and specifically, Li salts, Na salts, K salts, and $NH_4$ salts may be mentioned.

Particularly preferred are ammonium salts ($NH_4$ salts) of the above-mentioned compounds. Ammonium salts dissolve well in an aqueous medium with no possibility of leaving their metal ions in the resulting TFE/E copolymer as an impurity.

The total amount of an emulsifier to be used is preferably from 1,500 to 20,000 ppm, more preferably from 2,000 to 20,000 ppm, further preferably from 3,000 to 20,000 ppm, relative to the yield of the TFE/E copolymer. The emulsifier may be added all at once at the beginning of the polymerization or may be added in portions during the polymerization.

When the amount of an emulsifier is not lower than the lower limit of the above-mentioned range and is not higher than the upper limit of the above-mentioned range, the polymerization system tends to make a stable emulsion.

[Paraffin Wax]

A paraffin wax having a melting point of from 35 to 90°C is used. The presence of such a paraffin wax in the reaction solution for emulsion polymerization enables fine particles of the resulting TFE/E copolymer to be dispersed stably and hence facilitates production of a TFE/E copolymer with a high molecular weight and provision of a fluororesin with a low MFR.

The melting point of the paraffin wax is preferably from 35 to 75°C, more preferably 35 to 60°C. A paraffin wax having a melting point lower than 35°C contains many low molecular weight molecules and hence is likely to cause a chain transfer reaction, leading to production of a TFE/E copolymer having a low molecular weight. A paraffin wax having a melting point higher than 90°C may require a high polymerization temperature.

The amount of a paraffin wax to be added is preferably from 0.1 to 12 mass%, more preferably from 0.1 to 8 mass%, relative to the aqueous medium. When the amount of a paraffin wax is not lower than the lower limit of the above-mentioned range and not higher than the above-mentioned range, fine particles of the resulting TFE/E copolymer are obtained in a stable dispersion.

[Radical Polymerization Initiator]

As the radical polymerization initiator (hereinafter referred simply as polymerization initiator), those known to be used for production of TFE/E copolymers may be used. Water-soluble polymerization initiators are particularly preferred.

Specific examples of water-soluble polymerization initiators include redox polymerization initiators which are combinations of a persulfate such as ammonium persulfate, hydrogen peroxide or potassium permanganate with a reducing agent such as sodium hydrogen sulfite, sodium thiosulfate or oxalic acid, inorganic polymerization initiators consisting of such a redox polymerization initiator and a small amount of iron, a ferrous salt (such as ferrous sulfate), or silver nitrate, and organic polymerization initiators such as disuccinoyl peroxide and azobisisobutylamidine dihydrochloride.

The polymerization initiator may be added at the beginning of the emulsion polymerization or during the emulsion polymerization. The amount of the polymerization initiator to be added is from 10 to 500 ppm, preferably from 30 to 300 ppm, more preferably from 50 to 250 ppm, relative to the aqueous medium. When the amount is 10 ppm or above, a good polymerization rate is attained. When the amount is 500 ppm or below, a TFE/E copolymer having a high molecular weight is likely to be obtained.

In the production of a TFE/E copolymer, it is preferred not to use a chain transfer agent. The presence of a chain transfer agent in the polymerization unfavorably leads to production of a TFE/E copolymer having a low molecular weight.

[Polymerization Step]

In the polymerization step, TFE and ethylene are polymerized in the presence of an aqueous medium, an emulsifier, a paraffin wax and a polymerization initiator to produce an aqueous emulsion containing a TFE/E copolymer, as intended.

The polymerization temperature affects the degree of alternation of the TFE/E copolymer, which increases with decreasing temperature. The polymerization temperature is preferably from 35 to 100°C , more preferably from 35 to 80°C, further preferably from 35 to 75°C.

The polymerization pressure is preferably from 1.8 to 5.0 MPa, more preferably from 2.5 to 4.5 MPa, further preferably from 2.5 to 4.0 MPa, particularly preferably from 3.0 to 4.0 MPa. At a polymerization pressure not lower than the above-mentioned range, the polymerization reaction starts quickly and tends to yield a TFE/E copolymer having a high molecular weight. At a polymerization pressure not higher than the above-mentioned range, operational efficiency is good.

The aqueous emulsion obtained after the polymerization is preferred to contain the TFE/E copolymer at a concentration of from 1 to 50 mass%, particularly from 5 to 40 mass%.

In the production method of the present invention, although the ratio of the monomers, TFE and ethylene, is not particularly limited, it is preferred that TFE takes up a larger proportion of the monomers during the copolymerization reaction in order to obtain a TFE/E copolymer of the present invention having a specific composition in view of the reactivity of the monomers. It is also preferred to keep constant the ratio of TFE/ethylene during the copolymerization to make the copolymer composition, defined as the ratio of E units to TFE units, uniform throughout the copolymer.

Specifically speaking, in order to obtain a TFE/E copolymer consisting of from 50 to 60 mol% of TFE units and from 50 to 40 mol% of E units, the molar ratio of TFE to ethylene in the monomers is preferably 60-85 / 40-15. Keeping this ratio during the polymerization reaction readily leads to production of a TFE/E copolymer consisting of from 50 to 60 mol% of TFE units and from 50 to 40 mol% of E units.

In order to obtain a TFE/E copolymer consisting of from 50 to 55 mol% of TFE units and from 50 to 45 mol% of E units, the molar ratio of TFE to ethylene in the monomers is preferably 60-82 / 40-18.

In order to obtain a TFE/E copolymer consisting of from 50 to 52 mol% of TFE units and from 50 to 48 mol% of E units, the molar ratio of TFE to ethylene in the monomers is preferably 60-78 / 40-22.

Regarding the polymerization operation, it is preferred to charge the monomers in the TFE/ethylene molar ratio of 70/30 and then constantly add the monomers in the same ratio (TFE/ethylene molar ratio = 50/50) as the corresponding units in the resulting TFE/E copolymer to the copolymerization system during production of the TFE/E copolymer, as in Example 1. This is achieved by feeding a monomer mixture having a fixed composition during the polymerization reaction constantly while keeping a constant polymerization pressure. Such an operation enables production of a TFE/E copolymer consisting of 50 mol% of TFE units and 50 mol% of E units.

[Coagulation Step]

The TFE/E copolymer is recovered from the aqueous emulsion obtained in the polymerization step by known methods.

For example, the TFE/E copolymer may be coagulated by adding a coagulant or by freezing.

As the coagulant, a water-soluble salt such as potassium chloride, magnesium chloride, aluminum chloride or aluminum nitrate, an acid such as nitric acid, hydrochloric acid or sulfuric acid or a water-miscible organic solvent such as an alcohol or acetone may, for example, be mentioned. A coagulant is added preferably in an amount of from 0.001 to 20 parts by mass, particularly preferably from 0.01 to 10 parts by mass, relative to 100 parts by mass of the aqueous emulsion.

The TFE/E copolymer coagulate is collected by filtration and washed with wash water such as ion exchanged water, pure water or ultrapure water.

After the washing, the coagulate is dried to give a powder o the TFE/E copolymer. The drying method may be vacuum drying, radio frequency drying or hot air drying. The drying temperature is preferably from 60 to 110°C, more preferably from 75 to 95°C.

<Mechanism of Action>

The fluororesin of the present invention is excellent in radiation resistance because it is composed of a non-melt flowable high molecular weight TFE/E copolymer which consists of TFE units and E units in a specific ratio Specifically speaking, the fluororesin even improves in tensile strength upon radioactive irradiation, as demonstrated later in the Examples.

The reason is not clear, but it is supposed that the TFE/E copolymer of the present invention has a sufficiently high molecular weight and structurally tends to crosslink upon radioactive irradiation. The tendency to crosslink seems to increase with melting point, crystallinity and degree of alternation.

The production method of the present invention can produce a non-melt flowable high molecular weight TFE/E copolymer. The polymerization reaction proceeds efficiently even with a reduced amount of a radical polymerization initiator to produce a high molecular weight TFE/E copolymer because the paraffin wax having a melting point of from 35 to 90°C contributes to the dispersion stability of the reaction solution.

< Molding>

The fluororesin of the present invention is non-melt flowable and can be molded by known molding techniques for PTFEs. It can be molded into a desired shape by compression molding. For example, it is possible to charge powder of the fluororesin into a mold, then compresscompact it at an ordinary temperature by a press (preforming), and after demolding, sinter under heat and then cool, optionally under pressure, the resulting preform. The fluororesin powder may be preheated in the mold before compression by application of pressure followed by cooling. Powder of the fluororesin of the present invention gives a porous molded product after paste extrusion, drying and stretching. Regarding the stretching conditions, an appropriate stretching speed, for example, from 10%/sec to 50,000 %/sec and an appropriate degree of stretching, for example, at least 100%, may be used. The porous molded product can be obtained in various shapes such as tube, sheet and fiber.

EXAMPLES

Now, the present invention will be described in further detail by reference to Examples. However, the present invention is by no means restricted to these Examples.

<Measuring Methods>

[Copolymer Composition (unit: mol%)]

It was calculated from the results of measurement of the total amount of fluorine and melt $^{19}$F-NMR analysis.

[MFR (unit: g/10 min)]

It was measured in accordance with ASTM D3159 B at a temperature of 297°C under a load of 49 N with a high temperature melt indexer (manufactured by Toyo Seiki Seisaku-Sho, Ltd.) based on the actual measurement of fluororesin density, 1.7 g/cm3.

[Melting Point (unit: °C)]

It was determined with a differential scanning calorimeter (manufactured by Seiko Instruments Inc., Model: DSC220CU) from endothermic peaks which appeared during heating from room temperature to 300°C at a rate of 10°C/min.

[Crystallinity (unit: %)]

Crystallinity was calculated from the integral intensities of diffraction peaks obtained by X-ray diffractometry.

(X-ray diffractometry)

A powdery sample of a fluororesin was mounted on a sampling quartz plate, then, the plate was fixed on a sample holder, and X-ray diffraction measurements were made with a powder X-ray diffractometer. The resulting diffraction curve was subjected to curve fitting by analysis software by using the Pearson vii function with deviations of at most 10% between the fitting curve and the actual curve. The fitting curve was subjected to peak resolution. The amorphous peak was identified at $2\theta = 17.268°$, and two crystalline peaks were detected automatically. The area ratio of the two crystalline peaks was determined.

(Measurement Conditions)

| | |
|---|---|
| Shape of Sample: | 1.5 cm-square film with a thickness of 50 $\mu$m |
| Instrument: | D2 PHASER, manufactured by Bruker |
| Measuring Method: | the $2\theta/\theta$ method |
| Measurement range: | $2\theta = 10$ to $30°$ |
| X-ray Intensity: | 30 kV, 10 mA |
| X-ray source: | CuK$\alpha$ ray |
| Analysis Software: | TOPAS Ver. 4.2 manufactured by Bruker |
| Measuring Temp.: | room temperature |

(Calculation of crystallinity)

Crystallinity was calculated by the following formula from the integral intensity of the diffraction intensity curve obtained by X-ray diffractometry.

$$\text{Crystallinity (\%)} = (S19 + S20) / (S17 + S19 + S20) \times 100$$

S20: peak area around $2\theta = 20°$
S17: peak area around $2\theta = 17°$
S19: peak area around $2\theta = 19°$

[Degree of Alternation (unit: %)]

The molar fraction a of the following triad sequence (a), the molar fraction b of the following triad sequence (b) and the molar fraction c of the following triad sequence (c) were determined by melt $^{19}$F-NMR analysis and fluorine content analysis, and the degree of alternation (unit:%) was by the formula $a/\{a+(b/2)+c\}\times100$. Degree of alternation becomes better as it approximates to 100%.

(a) E unit - TFE unit - E unit
(b) TFE unit - TFE unit - E unit
(c) TFE unit - TFE unit - TFE unit

[EXAMPLE 1] (Production of Fluororesin A (TFE/E bipolymer))

Into a stainless steel pressure reactor having an inner volume of 3.2 L equipped with an anchor impeller, 1,670 g of ion exchanged water, 2.25 g of $C_2F_5OC_2F_4OCF_2COONH_4$ as an emulsifier, 198 g of tert-butanol and 84 g of a paraffin wax having a melting point of 54°C were charged.

Then, the pressure reactor was flushed with nitrogen, degassed and then pressurized with an initial monomer mixture gas having a TFE/ethylene molar ratio of 70/30 at 60°C to an inner pressure of 3.0 MPa. With the anchor impeller rotating at 200 rpm, a 3.2 mass% ammonium persulfate aqueous solution (hereinafter referred to simply as "3.2 mass% APS aqueous solution") was fed as a polymerization initiator to the reactor to start polymerization. Feeding of the 3.2 mass% APS aqueous solution was stopped once the polymerization began.

A monomer mixture gas having a TFE/ethylene molar ratio of 50/50 was continuously pressed into the reactor at a constant polymerization temperature of 60°C and a constant inner pressure of 3.0 MPa. When feeing of the monomer mixture gas amounted to 300 g in total, the reactor was cooled to an inner temperature of 10°C to terminate the polymerization, and a latex of Fluororesin A was obtained. The 3.2 mass% APS aqueous solution added was 7.81 g, including 0.25 g of APS. The polymerization time was 10 hours.

The latex was coagulated with nitric acid to precipitate Fluororesin A. Fluororesin A was collected by filtration, then washed with ion exchanged water and dried in an oven at 80°C for 15 hours to give 290 g of white powder of Fluororesin A (yield 97 mass%).

The copolymer composition, MFR, melting point, crystallinity and degree of alternation of the fluororesin were determined by the methods described above. The results are shown in Table 1. Table 1 also shows main production conditions (for the subsequent Examples as well).

[EXAMPLE 2] (Production of Fluororesin B (TFE/E copolymer))

The procedure in Example 1 was carried out except that the polymerization temperature was changed to 70°C, the amount of APS added was changed to 0.28 g, and the polymerization time was changed to 9.5 hours to obtain 285 g of white powder of Fluororesin B (yield 95 mass%).

[EXAMPLE 3] (Production of Fluororesin C (TFE/E copolymer))

The procedure in Example 1 was carried out except that the polymerization temperature was changed to 70°C, the amount of APS added was changed to 0.27 g, the TFE/ethylene molar ratio in the initial monomer mixture gas was changed to 74/26, the TFE/ethylene molar ratio in the monomer mixture gas continuously fed was changed to 52/48, and the polymerization time was changed to 9 hours to obtain 285 g of white powder of Fluororesin C (yield 95 mass%).

[EXAMPLE 4] (Production of Fluororesin D (TFE/E copolymer))

The procedure in Example 1 was carried out except that the polymerization temperature was changed to 70°C, the amount of APS added was changed to 0.26 g, the TFE/ethylene molar ratio in the initial monomer mixture gas was changed to 76/24, the TFE/ethylene molar ratio in the monomer mixture gas continuously fed was changed to 54/46, and the polymerization time was changed to 8.5 hours to obtain 275 g of white powder of Fluororesin D (yield 92 mass%).

In the following Comparative Examples 1, 2 and 3, fluororesins were produced by solution polymerization using $CF_3(CF_2)_5H$ (hereinafter referred to as "C6H") as the polymerization solvent and $H_2C=CHCF_2CF_2CF_2CF_3$ (hereinafter referred to as "PFBE") as an additional monomer to be copolymerized with TFE and ethylene.

[COMPARATIVE EXAMPLE 1] (Production of Fluororesin E (TFE/E/PFBE copolymer))

A pressure reactor having an inner volume of 1.3 L equipped with a stirrer was degassed, then charged with 1,340 g of C6H, 10.8 g of methanol and 4.5 g of PFBE and pressurized with an initial monomer mixture gas having a TFE/ethylene molar ratio of 70/30 with stirring to an inner pressure of 1.4 MPa. The reactor was heated to an inner temperature of 73°C, and 9 g of a 0.5 mass% tert-butyl peroxypivalate solution in C6H as a polymerization initiator was fed to start polymerization.

A monomer mixture gas having a TFE/ethylene molar ratio of 51/49 and 1.0 mol%, relative to the monomer mixture gas, of PFBE were fed continuously while keeping the pressure constant during the polymerization. When feeding of the monomer mixture gas amounted to 87 g in total after 8.0 hours of polymerization, the reactor was cooled to room temperature and purged to ordinary pressure. The resulting slurry of Fluororesin E was filtered through a glass filter to remove the solvent and dried at 150°C for 12 hours to obtain 84 g of powder of Fluororesin E (yield 97 mass%).

[COMPARATIVE EXAMPLE 2] (Production of Fluororesin F (TFE/E/PFBE copolymer))

A pressure reactor having an inner volume of 1.3 L equipped with a stirrer was degassed, then charged with 1,340 g of C6H, 5.23 g of methanol and 15.38 g of PFBE and pressurized with an initial monomer mixture gas having a TFE/ethylene molar ratio of 80/20 with stirring to an inner pressure of 1.5 MPa. The reactor was heated to an inner temperature of 66°C, and 5 g of a 2 mass% tert-butyl peroxypivalate solution in C6H as a polymerization initiator was fed to initiate polymerization.

A monomer mixture gas having a TFE/ethylene molar ratio of 58/42 and 3.3 mol%, relative to the monomer mixture gas, of PFBE were fed continuously while keeping the pressure constant during the polymerization. When feeding of the monomer mixture gas amounted to 90 g in total after 8.0 hours of polymerization, the reactor was cooled to room temperature and purged to ordinary pressure. The resulting slurry of Fluororesin F was filtered through a glass filter to remove the solvent and dried at 150°C for 12 hours to obtain 85 g of powder of Fluororesin F (yield 94 mass%).

In Comparative Example 3, a fluororesin was produced by solution polymerization using 1,3-dichloro-1,1,2,2,3-pentafluoropropane (AK225cb, manufactured by Asahi Glass Company, Limited, hereinafter referred to as "AK225cb") as a chain transfer agent.

[COMPARATIVE EXAMPLE 3] (Production of Fluororesin G (TFE/E copolymer))

A pressure reactor having an inner volume of 1.3 L equipped with a stirrer was degassed and charged with 380 g of AK225cb and 900 g of C6H.

Then, the reactor was pressurized with an initial monomer mixture gas having a TFE/ethylene molar ratio of 70/30 to an inner pressure of 1.5 MPa. 2 g of a 2 mass% tert-butyl peroxypivalate solution in C6H as a polymerization initiator was fed to start polymerization.

A monomer mixture gas having a TFE/ethylene molar ratio of 50/50 was fed continuously while keeping the pressure constant during the polymerization. When feeding of the monomer mixture gas amounted to 90 g in total after 1.5 hours of polymerization, the reactor was cooled to room temperature and purged to ordinary pressure. The resulting slurry of Fluororesin G was filtered through a glass filter to remove the solvent and dried at 150°C for 12 hours to obtain 75 g of powder of Fluororesin G (yield 83 mass%).

[EXAMPLE 5] (Production of Fluororesin H (TFE/E copolymer))

Into the same pressure reactor as used in Example 1, 1,670 g of ion exchanged water, 3.72 g of $C_2F_5OC_2F_4OCF_2COONH_4$ as an emulsifier, 198 g of tert-butanol, 84 g of a paraffin wax having a melting point of 54°C, 0.2 g of oxalic acid and 2.00 of succinic acid were charged. Then, the reactor was flushed with nitrogen, degassed and then pressurized with an initial monomer mixture gas having a TFE/ethylene molar ratio of 70/30 to an inner pressure of 3.0 MPa. The reactor was heated to 60°C, and then the anchor impeller was rotated at 200 rpm.

A 0.30% aqueous potassium permanganate solution as a polymerization initiator was fed at a rate of from 0.5 to 1.0 mL/min, and the feeding was stopped halfway. A monomer mixture gas having a TFE/ethylene molar ratio of 50/50 was continuously pressed into the reactor at a constant polymerization temperature of 60°C and a constant inner pressure of 3.0 MPa. When feeding of the monomer mixture gas amounted to 260 g in total, the reactor was cooled to an inner temperature of 10°C to terminate the polymerization, and a latex of Fluororesin H was obtained. The polymerization time was 390 minutes.

The latex was worked up in the same manner as in Example 1 to give 225 g of white powder of Fluororesin H (yield 87 mass%).

[Evaluation of Radiation Resistance]

The powders of Fluororesins A to G were shaped into 1 mm-thick sheets by compression molding as described below. Test specimens were cut out of the sheets, and the tensile strength (unit: MPa) of the specimens were measured before (at a radiation dose of 0 kGy) and after exposure to three levels of given doses of electron radiation, 60 kGy, 120 kGy and 240 kGy.

The sheets were prepared by compressing the powders with a hot press at 300°C at 10 kPa for 5 minutes after 5 minutes of preheating at 300°C in the hot press, and then cooling the molded products.

Tensile strength was measured in accordance with ASTM D3159 with a rate of pulling of 50 mm/min.

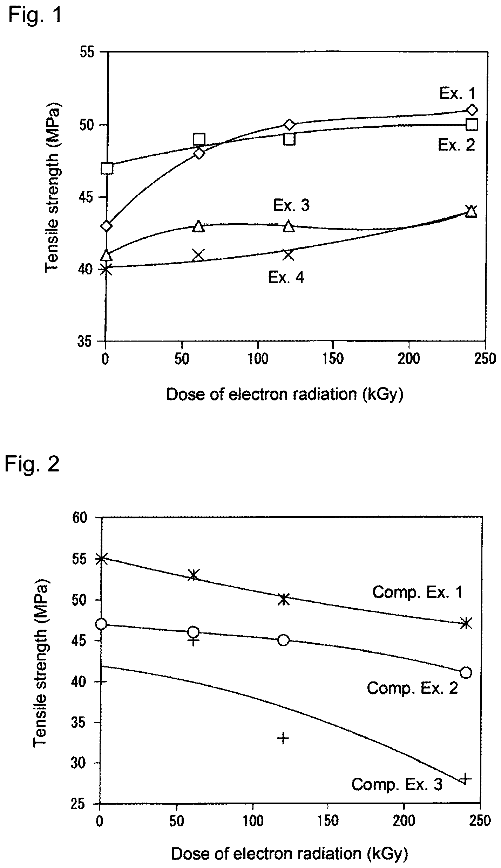

The results are shown in Figs. 1 and 2, in which the abscissa represents the dose of electron radiation, and the ordinate tensile strength.

[Evaluation of Extrusion Pressure and Stretchability]

Fluororesin A was conditioned at room temperature for at least 2 hours and sieved through a 1,910 $\mu$m mesh. The sieved fraction (50 g) of the power and a fluorinated solvent having a boiling point of at least 140°C (29.0 g) as a lubricant were mixed in in a 100 mL glass flask for 3 minutes. The resulting fluororesin compound was maintained in a thermostatic chamber at 70°C for 2 hours, and 5 g of the fluororesin compound was compressed into a cylindrical mold having an inner diameter of 8.5 mm at 65 kg/cm2 for 3 minutes, and the resulting preform was inserted into an extruder with a cylinder having an inner diameter of 9.5 mm kept at 80°C and left in the extruder for 1 hour. Then, the preform was extruded into beads through an orifice having an inner diameter of 2.0 mm, a land length of 20 mm and an entrance angle of 30° at an extrusion speed of 0.5 mm/min by paste extrusion. The pressure required for extrusion was measured as extrusion pressure. The resulting beads were dried at 80°C for 8 hours to remove the lubricant, and cut into an appropriate length, then heated to 80°C in a circulating air oven with both ends held by clamps separated by 5 mm and stretched at a speed of 10,000%/min to a degree of stretching of 2.

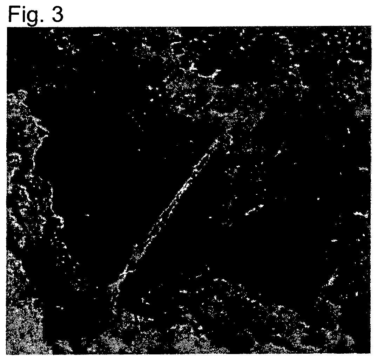

A cross section of the resulting stretched bead of Fluororesin A observed under a scanning electron microscope (SEM) is shown in Fig. 3, which shows Fluororesin A has a porous structure consisting of nodes and fibrils formed upon stretching.

[Table 1]

| | | Ex. 1 | Ex. 2 | Ex. 3 | Ex. 4 | Ex. 5 | Com Ex. 1 | Com Ex. 2 | Com Ex. 3 |
|---|---|---|---|---|---|---|---|---|---|
| Fluororesin | | A | B | C | D | H | E | F | G |
| Copolymer composition | TFE (mol%) | 50 | 50 | 52 | 54 | 50 | 50 | 56 | 50 |
| | E (mol%) | 50 | 50 | 48 | 46 | 50 | 49 | 41 | 50 |
| | PFBE (mol%) | - | - | - | - | - | 1 | 3 | - |
| Production conditions | Polymerization temp. (°C) | 60 | 70 | 70 | 70 | 60 | 73 | 66 | 66 |
| | Polymerization pressure (MPa) | 3.0 | 3.0 | 3.0 | 3.0 | 3.0 | 1.4 | 1.5 | 1.5 |
| Physical properties | MFR (g/ 10 min) | 0.008 | 0.009 | 0.02 | 0.05 | 0.00 | 9 | 19 | 60 |
| | Melting point (°C) | 278 | 276 | 275 | 275 | 277 | 266 | 233 | 279 |
| | Crystallinity (%) | 82 | 82 | 81 | 81 | 84 | 72 | 48 | 89 |
| | Degree of alternation (%) | 89 | 89 | 86 | 86 | 89 | 87 | 71 | 91 |

As shown in Table 1, Fluororesins A to D and H obtained in Examples 1 to 5 had sufficiently low MFRs and were non-melt flowable. As shown in Fig. 1, Fluororesins A to D were excellent in radiation resistance with a tendency to rather improve in tensile strength upon exposure to electron radiation.

On the other hand, Fluororesins E and F obtained in Comparative Examples 1 and 2 had higher MFRs than Fluororesins A to D and decreased in tensile strength upon exposure to electron radiation, as shown in Fig. 2.

Fluororesin G obtained in Comparative Example 3 had a higher MFR than Fluororesins A and B of the same copolymer composition, and decreased in tensile strength upon exposure to electron radiation, as shown in Fig. 2.

As shown in Fig. 3, Fluororesin A obtained in Example 1 gave a porous structure consisting of nodes and fibrils after paste extrusion and stretching by as described in the Examples in this specification.

The fluororesin of the present invention has excellent radiation resistance as well as various excellent properties found in TFE/E copolymers (heat resistance, chemical resistance, weather resistance, electrical insulating property and mechanical properties) and, therefore, is suitable as a material for various parts used in radioactive environments such as nuclear facilities and outer space. It can be used as a material for medical tools subjected to radiation sterilization. It can be used in the form of tubes, wire coating, seal material, porous membranes and filters after powder paste extrusion.

## Claims

1. A fluororesin composed of a tetrafluoroethylene/ethylene copolymer which is a bipolymer of tetrafluoroethylene and ethylene containing units derived from tetrafluoroethylene in a proportion of from 50 to 60 mol% relative to the total of the units derived from tetrafluoroethylene and the units derived from ethylene, and which has a melting point of from 275 to 290°C as determined according to the description, wherein the melt flow rate measured in accordance with ASTM D3159 B as described in the experimental section is at most 0.08 g/10 min.

2. The fluororesin according to Claim 1, which has a crystallinity of from 75 to 95% as determined according to the description.

3. The fluororesin according to Claim 1 or 2, which has a degree of alternation of from 75 to 95%, wherein the degree of alternation is the ratio in % of alternating arrangements of TFE units and E units in a fluororesin and the degree of alternation is determined as disclosed in the description.

4. A method for producing a fluororesin composed of a tetrafluoroethylene/ethylene copolymer which is a bipolymer of tetrafluoroethylene and ethylene containing units derived from tetrafluoroethylene in a proportion of from 50 to 60 mol% relative to the total of the units derived from tetrafluoroethylene and the units derived from ethylene, wherein the melt flow rate measured in accordance with ASTM D3159 B as described in the experimental section is at most 0.08 g/10 min,

wherein the method comprises copolymerizing tetrafluoroethylene and ethylene in the presence of an aqueous medium selected from a liquid mixture of a water-miscible organic solvent and water and water, an emulsifier, a paraffin wax having a melting point of from 35 to 90°C and from 10 to 500 ppm, relative of the aqueous medium, of a radical polymerization initiator, while keeping the ratio of tetrafluoroethylene / ethylene at from 60 to 85 mol% / from 40 to 15 mol%, to obtain a tetrafluoroethylene/ ethylene copolymer.

5. The method for producing the fluororesin according to Claim 4, wherein the polymerization pressure at the time of the copolymerization is from 1.8 to 5.0 MPa.

6. The method for producing the fluororesin according to Claim 4 or 5, wherein the emulsifier is at least one member selected from the group consisting of $C_{4-7}$ fluorinated carboxylic acids containing an etheric oxygen atom.

7. The method for producing the fluororesin according to any one of Claims 4 to 6, wherein the polymerization temperature is from 35 to 100°C.

8. The method for producing the fluororesin according to any one of Claims 4 to 7, wherein the ratio of tetrafluoroethylene / ethylene is kept at from 60 to 78 mol% / from 40 to 22 mol% during the copolymerization.

9. The method for producing the fluororesin according to any one of Claims 4 to 8, wherein the paraffin wax has a melting point of from 35 to 75°C.

**Patentansprüche**

1. Fluorharz, zusammengesetzt aus einem Tetrafluorethylen/Ethylen-Copolymer, das ein Bipolymer aus Tetrafluorethylen und Ethylen ist, das von Tetrafluorethylen abgeleitete Einheiten in einem Anteil von 50 bis 60 Mol-%, bezogen auf die Gesamtheit der von Tetrafluorethylen abgeleiteten Einheiten und der von Ethylen abgeleiteten Einheiten, enthält, und

das einen Schmelzpunkt von 275 bis 290°C, wie gemäß der Beschreibung bestimmt, aufweist,

wobei die Schmelzflussrate, gemessen gemäß ASTM D3159 B, wie im experimentellen Abschnitt beschrieben, höchstens 0,08 g/10 min beträgt.

2. Fluorharz nach Anspruch 1, das eine Kristallinität von 75 bis 95%, wie gemäß der Beschreibung bestimmt, aufweist.

3. Fluorharz nach Anspruch 1 oder 2, das einen Alternierungsgrad von 75 bis 95% aufweist, wobei der Alternierungsgrad das Verhältnis in % von alternierenden Anordnungen von TFE-Einheiten und E-Einheiten in einem Fluorharz ist und der Alternierungsgrad, wie in der Beschreibung angegeben, bestimmt wird.

4. Verfahren zur Herstellung eines Fluorharzes, zusammengesetzt aus einem Tetrafluorethylen/Ethylen-Copolymer, das ein Bipolymer aus Tetrafluorethylen und Ethylen ist, das von Tetrafluorethylen abgeleitete Einheiten in einem Anteil von 50 bis 60 Mol-%, bezogen auf die Gesamtheit der von Tetrafluorethylen abgeleiteten Einheiten und der von Ethylen abgeleiteten Einheiten, enthält,

wobei die Schmelzflussrate, gemessen gemäß ASTM D3159 B, wie im experimentellen Abschnitt beschrieben, höchstens 0,08 g/10 min beträgt,

wobei das Verfahren das Copolymerisieren von Tetrafluorethylen und Ethylen in Gegenwart eines wäßrigen Mediums, ausgewählt aus einem flüssigen Gemisch eines mit Wasser mischbaren organischen Lösungsmittels und Wasser und Wasser, eines Emulgators, eines Paraffinwachses mit einem Schmelzpunkt von 35 bis 90°C und von 10 bis 500 ppm, bezogen auf das wäßrige Medium, eines radikalischen Polymerisationsstarters, während des Haltens des Verhältnisses von Tetrafluorethylen/Ethylen bei 60 bis 85 Mol-% / 40 bis 15 Mol-%, um ein Tetrafluorethylen/Ethylen-Copolymer zu erhalten, umfasst.

5. Verfahren zur Herstellung des Fluorharzes nach Anspruch 4, wobei der Polymerisationsdruck zum Zeitpunkt der Copolymerisation von 1,8 bis 5,0 MPa beträgt.

6. Verfahren zur Herstellung des Fluorharzes nach Anspruch 4 oder 5, wobei der Emulgator mindestens ein Mitglied, ausgewählt aus der Gruppe, bestehend aus $C_{4-7}$ fluorierten Carbonsäuren, enthaltend ein etherisches Sauerstoffatom, ist.

7. Verfahren zur Herstellung des Fluorharzes nach einem der Ansprüche 4 bis 6, wobei die Polymerisationstemperatur von 35 bis 100°C beträgt.

8. Verfahren zur Herstellung des Fluorharzes nach einem der Ansprüche 4 bis 7, wobei das Verhältnis von Tetrafluorethylen/Ethylen bei 60 bis 78 Mol-% / 40 bis 22 Mol-% während der Copolymerisation gehalten wird.

9. Verfahren zur Herstellung des Fluorharzes nach einem der Ansprüche 4 bis 8, wobei das Paraffinwachs einen Schmelzpunkt von 35 bis 75°C aufweist.

**Revendications**

1. Résine fluorée composée d'un copolymère tétrafluoroéthylène/éthylène qui est un bipolymère de tétrafluoroéthylène et d'éthylène qui contient des unités qui sont dérivées à partir du tétrafluoroéthylène selon une proportion qui va de 50 % à 60 % en pourcentage molaire par rapport au total des unités qui sont dérivées à partir du tétrafluoroéthylène et des unités qui sont dérivées à partir de l'éthylène, et lequel présente un point de fusion qui est compris entre 275 °C et 290 °C, tel que déterminé conformément à la description ;
dans laquelle l'indice de fusion qui est mesuré conformément à ASTM D3159 B tel que décrit dans la section expérimentale est d'au plus 0,08 g/10 min.

2. Résine fluorée selon la revendication 1, laquelle présente une cristallinité qui est comprise entre 75 % et 95 %, tel que déterminé conformément à la description.

3. Résine fluorée selon la revendication 1 ou 2, laquelle présente un degré d'alternance qui est compris entre 75 % et 95 %, dans lequel le degré d'alternance est le rapport en % d'agencements alternés d'unités de TFE et d'unités de E dans une résine fluorée et le degré d'alternance est déterminé tel que divulgué dans la description.

4. Procédé pour produire une résine fluorée qui est composée d'un copolymère tétrafluoroéthylène /éthylène qui est un bipolymère de tétrafluoroéthylène et d'éthylène qui contient des unités qui sont dérivées à partir du tétrafluoroéthylène selon une proportion qui va de 50 % à 60 % en pourcentage molaire par rapport au total des unités qui sont dérivées à partir du tétrafluoroéthylène et des unités qui sont dérivées à partir de l'éthylène ;
dans lequel l'indice de fusion qui est mesuré conformément à ASTM D3159 B tel que décrit dans la section expérimentale est d'au plus 0,08 g/10 min ;
dans lequel le procédé comprend la copolymérisation de tétrafluoroéthylène et d'éthylène en présence d'un milieu aqueux qui est sélectionné parmi un mélange liquide d'un solvant organique miscible dans l'eau et d'eau, de l'eau, un émulsifiant, une cire paraffine qui présente un point de fusion qui est compris entre 35 °C et 90 °C, et de 10 ppm à 500 ppm, par rapport au milieu aqueux, d'un initiateur de polymérisation radicalaire, tout en maintenant le rapport tétrafluoroéthylène/éthylène à entre 60 % et 85 % en pourcentage molaire/entre 40 % et 15 % en pourcentage molaire, de manière à obtenir un copolymère tétrafluoroéthylène/éthylène.

5. Procédé pour produire la résine fluorée selon la revendication 4, dans lequel la pression de polymérisation à l'instant de la copolymérisation est comprise entre 1,8 MPa et 5,0 MPa.

6. Procédé pour produire la résine fluorée selon la revendication 4 ou 5, dans lequel l'émulsifiant est au moins un élément qui est sélectionné parmi le groupe qui est constitué par les acides carboxyliques fluorés $C_{4-7}$ qui contiennent un atome d'oxygène éthérique.

7. Procédé pour produire la résine fluorée selon l'une quelconque des revendications 4 à 6, dans lequel la température de polymérisation est comprise entre 35 °C et 100 °C.

8. Procédé pour produire la résine fluorée selon l'une quelconque des revendications 4 à 7, dans lequel le rapport tétrafluoroéthylène/éthylène est maintenu à entre 60 % et 78 % en pourcentage molaire/entre 40 % et 22 % en pourcentage molaire pendant la copolymérisation.

9. Procédé pour produire la résine fluorée selon l'une quelconque des revendications 4 à 8, dans lequel la cire paraffine présente un point de fusion qui est compris entre 35 °C et 75 °C.

Fig. 1

Fig. 2

Fig. 3

**EP 3 366 710 B1**

**REFERENCES CITED IN THE DESCRIPTION**

**Patent documents cited in the description**

- JP S3922586 B
- JP S5523847 B
- CN 101597354 A
- JP S4925083 A
- JP S4962584 A
- JP H0733807 A
- JP H08506140 A